# EUROPÄISCHE PATENTSCHRIFT

(11) **EP 1 361 374 B1**
(45) Veröffentlichungstag und Bekanntmachung des Hinweises auf die Patenterteilung: **18.02.2009**
(21) Anmeldenummer: 02010541.7
(22) Anmeldetag: 10.05.2002
(51) Int. Cl.: F16D 25/0638, F16D 25/12

(54) **Kupplungseinrichtung für ein Kraftfahrzeug oder dergleichen**
Clutch device for motor vehicle or the like
Système d'embrayage pour véhicule automobile ou similaire

(43) Veröffentlichungstag der Anmeldung: 12.11.2003
(73) Patentinhaber: BorgWarner, Inc., Auburn Hills, MI 48326-2872 (US)
(72) Erfinder: Schmidt, Thomas, 76829 Landau (DE)
(74) Vertreter: Patentanwälte Westphal, Mussgnug & Partner

(56) Entgegenhaltungen:
- EP-A- 1 079 130
- US-A- 5 267 807
- PATENT ABSTRACTS OF JAPAN vol. 016, no. 519 (M-1330), 26. Oktober 1992 (1992-10-26) -& JP 04 191530 A (NISSAN MOTOR CO LTD), 9. Juli 1992 (1992-07-09)

## Beschreibung

Die Erfindung betrifft eine Kupplungseinrichtung für ein Kraftfahrzeug oder dergleichen gemäß dem Oberbegriff des Anspruchs 1.

Die bekannten Kupplungseinrichtungen, von denen die Erfindung ausgeht, sind aus dem Stand der Technik in einer Vielzahl von Abwandlungen bekannt. Solche Kupplungseinrichtungen umfassen neben der eigentlichen Kupplung, also der antriebsseitig über eine Antriebswelle beispielsweise mit einem Verbrennungsmotor und abtriebsseitig über eine Abtriebswelle zum Beispiel mit einem Getriebe verbundenen Elemente, welche im Falle eines Betätigens der Kupplung die Antriebswelle mit der Abtriebswelle verbinden, eine Betätigungseinrichtung zum Betätigen dieser Kupplung.

Die Erfindung bezieht sich nunmehr auf Kupplungseinrichtungen bei der die Betätigungseinrichtung im wesentlichen aus einem Druckkolben besteht. Dieser Druckkolben ist gemäß dem Stand der Technik in einem Gehäuse angeordnet. Dieser Druckkolben ist fernerhin in dem Gehäuse verschieblich geführt. Durch eine entsprechende Verschiebebewegung des Druckkolbens kann die Kupplung betätigt werden.

Zum Erzeugen einer derartigen Verschiebebewegung des Druckkolbens muß eine entsprechende Druckkraft erzeugt werden. Dies geschieht üblicherweise auf hydraulischem Wege. Konkret sind das Gehäuse und der Druckkolben gemäß dem Stand der Technik derart in Bezug aufeinander angeordnet, dass diese einen - nachfolgend als Druckkammer bezeichneten- Hohlraum einschließen, welcher zum Erzeugen der vorgenannten Druckkraft mit einem geeigneten Druckmittel, üblicherweise ein speziell hierfür konzipiertes synthetisches Öl, beaufschlagbar ist.

Es ist nun einerseits erforderlich, den Druckkolben im Anschluß an einen Betätigungsvorgang der Kupplung wieder in seine Ausgangslage zu verbringen, andererseits ist es wünschenswert, die die Verschiebebewegung des Druckkolbens hervorrufende Druckkraft gezielt zu dosieren. So ist insbesondere dann eine Druckkraftregelung vonnöten, wenn das Gehäuse und der Druckkolben mit der Antriebswelle mitrotierende Teile darstellen. In diesem Fall nimmt der Druck des Druckmittels innerhalb der vorgenannten Druckkammer mit der Drehzahl der Rotationsbewegung zu, was im Allgemeinen unerwünscht ist.

Um den Druckkolben wieder in seine Ausgangslage verbringen zu können und darüberhinaus eine Regelung der die Verschiebebewegung des Druckkolbens hervorrufenden Druckkraft vornehmen zu können, umfaßt die Betätigungseinrichtung gemäß dem Stand der Technik eine Vorrichtung zum Erzeugen einer entgegen der vorgenannten Druckkraft wirkenden Gegendruckkraft. Eine derartige Vorrichtung zum Erzeugen der Gegendruckkraft umfaßt einen weiteren Kolben, welcher nachfolgend als Ausgleichskolben bezeichnet ist. Dieser Ausgleichskolben ist so angeordnet, dass er mit dem Druckkolben und mit dem Gehäuse einen Hohlraum, welcher nachfolgend als Ausgleichskammer bezeichnet ist, einschließt. Diese Ausgleichskammer kann zum Erzeugen der Gegendruckkraft -ähnlich der vorgenannten Druckkammer- mit einem (Gegen-) Druckmittel, vorzugsweise ein synthetisches Öl, beaufschlagt werden.

Zum Erzeugen der auf den Druckkolben wirkenden Gegendruckkraft ist es erforderlich, den Ausgleichskolben bei Druckbeaufschlagung der Ausgleichskammer mit (Gegen-) Druckmittel unverschieblich an dem Gehäuse zu halten. Die hierfür aus dem Stand der Technik bekannten Vorrichtungen benötigen zusätzlichen Raum innerhalb der Kupplungseinrichtung und sind darüberhinaus vergleichsweise teuer in der Herstellung und/oder nur unter erhöhtem Zeitaufwand zu montieren, was sich ebenfalls in einem erhöhten Preis des Endprodukts niederschlägt.

Zur Verdeutlichung des oben ganz allgemein geschilderten Sachverhalts wird nachfolgend noch einmal beispielhaft anhand einer in der Zeichnungsfigur 4 dargestellten Lamellenkupplungseinrichtung gemäß dem Stand der Technik die Problematik dargelegt. Ähnliche Lamellenkupplungseinrichtungen sind in den Druckschriften JP 04-191530 und EP 1 079 130 beschrieben.

Die dargestellte Lamellenkupplungseinrichtung umfaßt ein auf der Antriebsseite 22 mit einer (nicht dargestellten) Antriebswelle verbundenes im wesentlichen rotationssymmetrisch zu einer Achse ax ausgebildetes Gehäuse bestehend aus einem im wesentlichen hohlzylindrischen Außenlamellenträger 5 und einem im wesentlichen zu dem einen im wesentlichen hohlzylindrischen Außenlamellenträger 5 koaxial innenliegenden hohlzylindrischen Mittelteil 15.4. Bestandteil der Lamellenkupplungseinrichtung ist fernerhin ein auf der Abtriebsseite 23 mit einer (nicht dargestellten) Abtriebswelle verbundener im wesentlichen rotationssymmetrisch zu der Achse ax ausgebildeter Innenlamellenträger 7.

Außen- und Innenlamellenträger 5, 7 sind -wie aus deren Bezeichnung abzuleiten ist- die Träger sogenannter Außen- und Innenlamellen 6, 8. Diese sind an ihren jeweiligen Außen- bzw. Innenlamellenträgern 5, 7 im wesentlichen drehfest jedoch axial begrenzt verschieblich gelagert. Die gesamte Anordnung bestehend aus im vorliegenden Fall drei Außen- und drei Innenlamellen 5, 7 wird als Lamellenpaket 4 bezeichnet. Außen- und Innenlamellen 5, 7 greifen kammartig ineinander und sind jeweils paarweise miteinander in Reibverbindung verbringbar. Die einendseitig das Lamellenpaket 4 abschließende und durch einen Sicherungsring 27 in ihrerer einendseitigen Axialverschieblichkeit begrenzte Lamelle (hier eine Außenlamelle) wird als Endplatte bezeichnet. Diese ist in der Zeichnungsfigur 4 mit dem Bezugszeichen 9 versehen. Die andernendseitig das Lamellenpaket 4 abschließende Lamelle (vorliegend eine Innenlamelle) wird als Druckplatte bezeichnet. Diese Druckplatte ist in der Zeichnungsfigur 4 mit dem Bezugszeichen 10 versehen.

Diese Anordnung eines aus mehreren -im vorliegenden Fall aus sechs Lamellen- bestehenden vorzugsweise mittels eines via einen Kühlölraum 13 zugeführten Kühlmittels, wie z. B. Kühlöl 26, gekühlten Lamellenpakts 4 auf Außen- und Innenlamellenträgern 5, 7 bildet den vorgehend als eigentliche Kupplung bezeichneten Teil einer Lamellenkupplungseinrichtung.

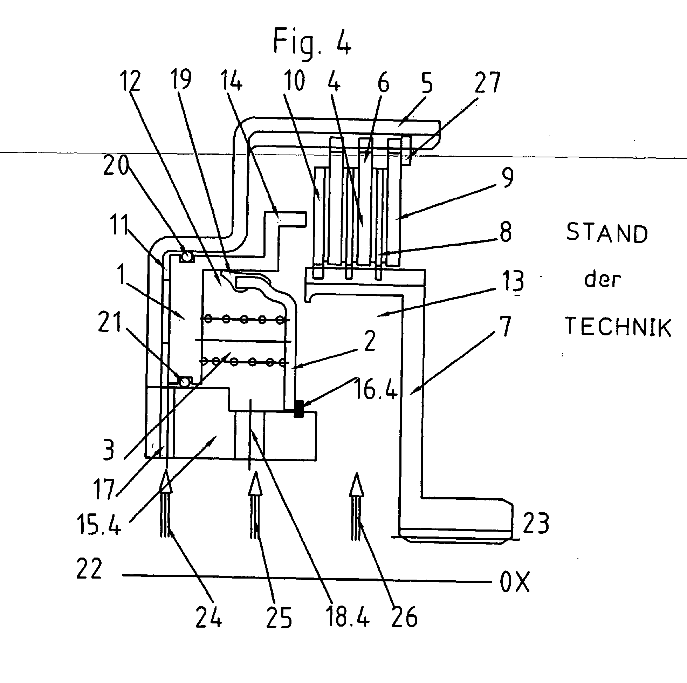

Weiterer Bestandteil der Lamellenkupplungseinrichtung gemäß dem Stand der Technik nach der Figur 4 ist die vorstehend erwähnte Betätigungseinrichtung zum Betätigen dieser Kupplung. Diese Betätigungseinrichtung umfaßt -wie vorstehend ebenfalls im Detail dargelegt wurde- den Druckkolben 1 und den Ausgleichskolben 2.

Der Druckkolben 1 ist im wesentlichen ringförmig ausgebildet. Er ist mit dessen Innenwandung an der Außenwandung des im wesentlichen zylindermantelförmiges Mittelteils 15.4 verschieblich geführt. Durch eine entsprechende Verschiebebewegung des Druckkolbens 1 drückt dieser mittels eines entsprechenden im vorliegenden Fall ringförmig ausgebildeten Druckelements 14 gegen die Druckplatte 10 des Lamellenpakets 4, so dass dieses aufgrund der fehlenden axialen Ausweichmöglichkeit der Enplatte 9 zusammengedrückt wird und die einzelnen benachbarten Lamellen 6, 8 in Reibverbindung treten, also die Kupplung betätigt wird.

Das Gehäuse und der Druckkolben 1 sind einen Hohlraum bildend zueinander angeordnet. Dieser Hohlraum, die sogenannte Druckkammer, welcher gegenüber der Umgebung vorliegend mittels zweier Dichtringe 20, 21 abgedichtet ist, ist in der Zeichnungsfigur mit dem Bezugszeichen 11 gekennzeichnet.

Durch eine oder mehrere radial verlaufende Öffnungen im Mittelteil 15.4 des Gehäuses ist dieser Druckkammer 11 Drucköl 24 zuführbar. Die entsprechenden Öffnungen werden daher auch als Druckölkanäle bezeichnet. Einer dieser Druckölkanäle ist der Zeichnungsfigur 4 zu entnehmen und durch das Bezugszeichen 17 gekennzeichnet.

Der vorstehend als Bestandteil der Betätigungseinrichtung angegebene Ausgleichskolben 2 ist im Ausführungsbeispiel gemäß der Figur 4 im wesentlichen ringförmig ausgebildet. Er ist so angeordnet, dass er mit dem Druckkolben 1 und mit dem Mittelteil 15.4 des Gehäuses einen Hohlraum einschließt. Dieser Hohlraum wird als Ausgleichskammer bezeichnet und ist in der Figur 4 durch das Bezugszeichen 12 gekennzeichnet.

Die Ausgleichskammer 12 kann zum Erzeugen der vorerwähnten Gegendruckkraft ähnlich der vorbeschriebenen Druckkammer 11 mit einem durch entsprechende Öffnungen zugeführten (Gegen-) Druckmittel, nachstehend als Ausgleichsöl 25 bezeichnet, beaufschlagt werden. Die Öffnungen zum Zuführen des Ausgleichsöls 25 werden nachstehend als Ausgleichsölkanäle bezeichnet. Einer dieser das Mittelteil 15.4 des Gehäuses radial durchsetzenden Ausgleichsölkanäle ist in der Figur 4 dargestellt und mittels des Bezugszeichens 18.4 gekennzeichnet.

Um die zu erzeugende Gegendruckkraft weiter zu erhöhen ist gemäß dem vorgestellten Ausführungsbeispiel gemäß dem Stand der Technik in der Ausgleichskammer 12 ein Federpaket 3 angeordnet, welches gegen eine Innenwandung des Ausgleichskolbens 2 abgestützt entgegen der Verschieberichtung des Druckkolbens 1 beim Betätigen der Kupplung gegen den Druckkolben 1 gehalten ist.

Um beim Betätigen der Kupplung durch Verschieben des Druckkolbens 1 in axialer Richtung überhaupt einen entsprechenden Gegendruck in der Ausgleichskammer 12 erzeugen zu können, ist es erforderlich, diese einerseits gegen die Umgebung abzudichten und andererseits den Ausgleichskolben 2 wenigstens axial unverschieblich zu halten. Erstere Funktion wird mittels einer ringförmig die angrenzenden Wandungen des Druckkolbens 1 und des Ausgleichskolbens 2 abschließenden Dichtlippe 19 realisiert. Der axiale Verschiebungsschutz erfolgt üblicherweise gemäß dem Stand der Technik mittels eines Sicherungsrings 16.4.

Obwohl sich diese Anordnung dem Grunde nach bewährt hat besteht weiterhin der Bedarf eine preisgünstige und platzsparende Alternativlösung vorzustellen.

Der Erfindung liegt somit die Aufgabe zugrunde, die bekannten Kupplungseinrichtungen derart auszugestalten und weiterzubilden, daß diese preisgünstiger herzustellen und darüberhinaus kleinere Baumaße aufweisen.

Diese Aufgabe wird durch eine Kupplungseinrichtung gattungsgemäßer Art mit den Merkmalen des kennzeichnenden Teils des Anspruches 1 erfindungsgemäß gelöst.

Vorteilhafte Ausführungen und Weiterbildungen der Erfindung sind in den Unteransprüchen angegeben.

Der wesentliche Gedanke der Erfindung besteht darin, , dass zum beim Betätigen der Kupplung im wesentlichen unverschieblichen Halten des Ausgleichskolbens an dem Gehäuse eine Rast- oder Schnappeinrichtung vorgesehen ist. Mit Hilfe einer derartigen Rast- oder Schnappeinrichtung ist ein Ausgleichskolben schnell und einfach montierbar. Darüberhinaus sind Rast- oder Schnappeinrichtungen aus einer Vielzahl anderer Anwendungen bekannt, so dass eine kostengünstige Herstellung und platzsparende Ausführung gewährleistet ist.

Eine vorteilhafte Ausführungsvariante der Erfindung besteht darin, dass die Rast- oder Schnappeinrichtung, nachfolgend der Einfachheit halber lediglich als Rasteinrichtung bezeichnet, wenigstens ein Rastelement erster Art umfaßt, welches dem Gehäuse zugeordnet ist und wenigstens ein Rastelement zweiter Art, welches dem Ausgleichskolben zugeordnet ist, wobei die Rastelemente erster und zweiter Art miteinander in Rast- oder Schnappeingriff verbringbar sind. Diese Variante stellt die einfachste Form eines Rast- oder Schnappverschlusses dar und ist daher gegenüber komplizierten Drehschnapp- oder Schraubschnappmechanismen, welche selbstverständlich ebenfalls denkbar sind, zu bevorzugen.

In besonderer Ausgestaltung dieser Variante sieht die Erfindung vor, dass das Rastelement zweiter Art Bestandteil des Ausgleichskolbens ist. Es ist jedoch in einigen Fällen auch vorteilhaft, dass das Rastelement zweiter Art Bestandteil einer separaten ggf. speziell dafür vorgesehenen Ausgleichskolbenhalteeinrichtung ist. Beide Ausführungsvarianten können bei Bedarf auch kombiniert zur Anwendung kommen. In allen Fällen ist eine Lösung der vorgestellten Aufgabe gegeben.

Für die Fälle, insbesondere auch für eine solche Lamellenkupplungseinrichtung gemäß dem Stand der Technik wie sie in der Figur 4 dargestellt ist, bei denen das Gehäuse im wesentlichen rotationssymmetrisch zu einer Achse ausgebildet ist und ein im wesentlichen zylindermantelförmiges Mittelteil umfaßt an dessen Außenwandung der Druckkolben, welcher im wesentlichen ringförmig ausgebildet ist, mit dessen Innenwandung axial verschieblich geführt ist und an dem der Ausgleichskolben, welcher ebenfalls im wesentlichen ringförmig ausgebildet ist, beim Betätigen der Kupplung in axialer Verschieberichtung des Druckkolbens unverschieblich gehalten ist, ist erfindungsgemäß vorgesehen, dass das Rastelement erster Art eine in der Innenwandung oder der Außenwandung des Mittelteils im wesentlichen koaxial umlaufende Nut ist und das Rastelement zweiter Art wenigstens eine Rastnase umfaßt, welche zum Verrasten in die umlaufende Nut eingreifbar ist.

Vorzugsweise ist die wenigstens eine Rastnase am Ende eines von dem Ausgleichskolben oder von der Ausgleichskolbenhalteeinrichtung im wesentlichen axial abstehenden Fingers angeformt. Üblicherweise sind eine Vielzahl von diesen am Ende eines Fingers angebrachten Rastnasen koaxial an einem ringförmigen Ende des Ausgleichskolbens oder der Ausgleichskolbenhalteeinrichtung angebracht. Alternativ hierzu ist erfindungsgemäß auch vorgesehen, dass eine einzige Rastnase koaxial umlaufend ausgebildet ist.

In weiterer Ausgestaltung der Erfindung ist ferner vorgesehen, dass die Ausgleichskolbenhalteeinrichtung ringförmig vorzugsweise passend zu einem Ausgleichskolben ähnlich dem gemäß der Figur 4 ausgebildet ist.

Drei Ausführungsbeispiele der Erfindung sind in den Zeichnungen dargestellt und einer Ausführungsvariante einer Lamellenkupplungseinrichtung gemäß dem Stand der Technik gegenübergestellt. Es zeigen:
- Figur 1a) -: ein erstes Ausführungsbeispiel einer erfindungsgemäßen Lamellenkupplungseinrichtung mit erfindungsgemäßem Ausgleichskolben im Axialhalbschnitt
- Figur 1b) -: den erfindungsgemäßen Ausgleichskolben gemäß der Figur 1a) in perspektivischer Darstellung
- Figur 2 -: ein zweites Ausführungsbeispiel einer erfindungsgemäßen Lamellenkupplungseinrichtung mit erfindungsgemäßem Ausgleichskolben im Axialhalbschnitt
- Figur 3a) -: ein drittes Ausführungsbeispiel einer erfindungsgemäßen Lamellenkupplungseinrichtung mit erfindungsgemäßem Haltering für den Ausgleichskolben im Axialhalbschnitt
- Figur 3b) -: den erfindungsgemäßen Haltering gemäß der Figur 3a) in perspektivischer Darstellung
- Figur 4 -: ein Ausführungsbeispiel einer Lamellenkupplungseinrichtung gemäß dem Stand der Technik im Axialhalbschnitt

Die Ausführungsbeispiele der Erfindung werden im folgenden näher beschrieben.

Alle Ausführungsbeispiele gehen von einer Lamellenkupplungseinrichtung an sich bekannter Art aus, wie sie z.B. in der vorgehend im Detail beschrieben Zeichnungsfigur 4 dargestellt ist. Demgemäß sind nachfolgend angeführte Einzelbauteile bzw. -komponenten bei allen nachfolgend beschriebenen Ausführungsbeispielen von Lamellenkupplungseinrichtungen identisch ausgeführt. Um eine leichte Zuordnung identischer Einzelbauteile bzw. -komponenten zu gewährleisten, sind diese in allen Zeichnungsfiguren mit denselben Bezugszeichen versehenen.

Alle Lamellenkupplungseinrichtungen, auf welche nachfolgend Bezug genommen wird, umfassen ein auf der Antriebsseite 22 mit einer (nicht dargestellten) Antriebswelle verbundenes im wesentlichen rotationssymmetrisch zu einer Achse ax ausgebildetes Gehäuse bestehend aus einem im wesentlichen hohlzylindrischen Außenlamellenträger 5 und einem im wesentlichen zu dem einen im wesentlichen hohlzylindrischen Außenlamellenträger 5 koaxial innenliegenden hohlzylindrischen Mittelteil, welches in den jeweiligen Figuren zu den unterschiedlichen erfindungsgemäßen Ausführungsbeispielen aufgrund dessen erfindungsgemäßer Ausgestaltung mit unterschiedlichen Bezugszeichen 15.1 bis 15.3 versehen ist.

Fernerhin umfassen alle Lamellenkupplungseinrichtungen gemäß den Zeichnungsfiguren 1 bis 3 entsprechenden der in der Figur 4 dargestellten Lamellenkupplungseinrichtung gemäß dem Stand der Technik einen auf der Abtriebsseite 23 mit einer (nicht dargestellten) Abtriebswelle verbundenen und im wesentlichen rotationssymmetrisch zu der vorgenannten Achse ax ausgebildeten Innenlamellenträger 7.

Weiterhin sind jeweils drei Außen- und Innenlamellen 6, 8 ein Lamellenpaket 4 bildend vorgesehen, welche an den Außen- bzw. Innenlamellenträgern 5, 7 im wesentlichen drehfest aber axial begrenzt beweglich gelagert sind.

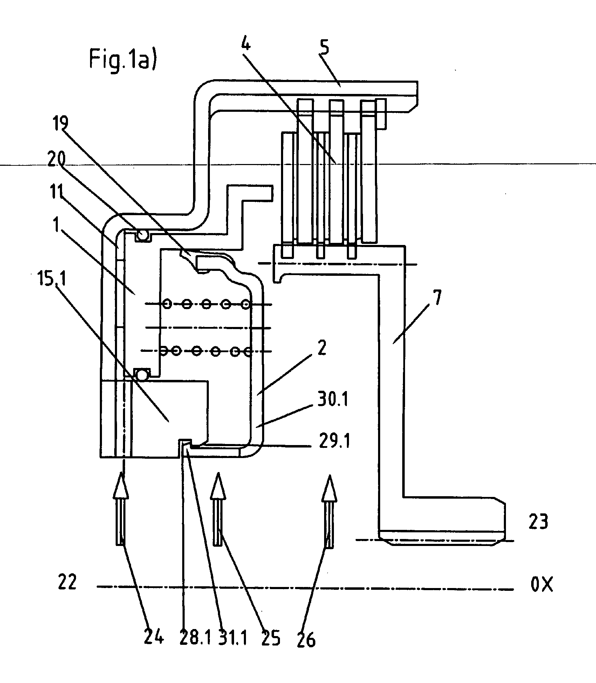

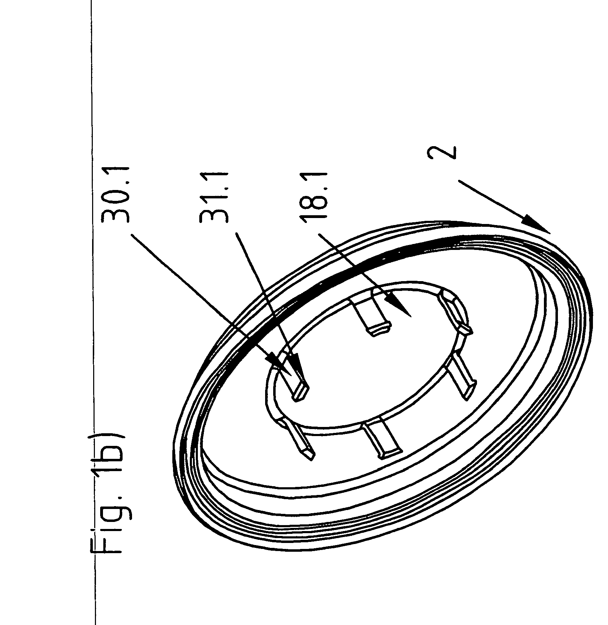

Die einendseitig das Lamellenpaket 4 abschließende und durch einen Sicherungsring 27 in ihrer einendseitigen Axialverschieblichkeit begrenzte Außenlamelle, die sogenannte Endplatte, ist in den Figuren 1, 2 und 3 entsprechend der Zeichnungsfigur 4 mit dem Bezugszeichen 9 gekennzeichnet. Die andernendseitig das Lamellenpaket 4 abschließende Innenlamelle, die sogenannte Druckplatte, ist in ist in den Figuren 1, 2 und 3 entsprechend der Zeichnungsfigur 4 mit dem Bezugszeichen 10 gekennzeichnet.

Weitere Bestandteile der Lamellenkupplungseinrichtungen sind die ringförmig ausgebildeten Druck- bzw. Ausgleichskolben 1 bzw. 2. Dem Druckkolben 1 ist in allen Ausführungsbeispielen gemäß der Erfindung (Figuren 1 bis 3) fernerhin ein ringförmig ausgebildetes Druckelement 14 zum Betätigen der Kupplung zugeordnet.

Der Druckkolben 1 ist mit dessen Innenwandung an der Außenwandung des im wesentlichen zylindermantelförmigen Mittelteils 15.1, 15.2, 15.3 verschieblich geführt. Das Gehäuse und der Druckkolben 1 sind die sogenannte Druckkammer 11 bildend zueinander angeordnet. Diese Druckkammer 11 ist gegenüber der Umgebung mittels zweier Dichtringe 20, 21 abgedichtet. Fernerhin entnimmt man den Zeichnungsfiguren 1 bis 3 einen durch das Bezugszeichen 17 gekennzeichneten Druckölkanal im Mittelteil 15.1, 15.2, 15.3.

Der Ausgleichskolben 2 ist in allen Ausführungsbeispielen gemäß den Figuren 1 bis 3 im wesentlichen ringförmig ausgebildet und so angeordnet, dass er mit dem jeweiligen Druckkolben 1 und mit dem jeweiligen Mittelteil 15.1, 15.2, 15.3 des Gehäuses die sogenannte Ausgleichskammer 12 einschließt. Zwischen den ringförmig aneinandergrenzenden Wandungen des Druckkolbens 1 und des Ausgleichskolbens 2 ist eine Dichtlippe 19 zum Abdichten der Ausgleichskammer 12 gegenüber der Umgebung vorgesehen.

In allen Ausführungsvarianten gemäß der Erfindung ist entsprechend dem Ausführungsbeispiel gemäß dem Stand der Technik in den jeweiligen Ausgleichskammern 12 ein Federpaket 3 angeordnet, welches gegen eine Innenwandung des Ausgleichskolbens 2 abgestützt ist und entgegen der Verschieberichtung des Druckkolbens 1 beim Betätigen der Kupplung gegen den Druckkolben 1 gehalten wird.

Die Figuren 1a) und 1b) zeigen nunmehr ein erstes Ausführungsbeispiel einer Kupplungseinrichtung für ein Kraftfahrzeug mit erfindungsgemäß vorgesehener Rasteinrichtung. Im in Rede stehenden Ausführungsbeispiel ist die Rasteinrichtung dadurch realisiert, dass der im wesentlichen kreisringförmige Ausgleichskolben 2 mit einzelnen -hier: sechs- am Innenumfang -hier äquidistant zueinander- angeordneten und im wesentlichen in Achsrichtung weisenden Fingern 30.1 versehen ist, welche an deren freien Enden jeweils eine radial nach außen weisende Rastnase 31.1 in der Art eines Widerhakens aufweisen. Korrespondierend hierzu weist das Mittelteil 15.1 eine in die zylindermantelförmige Innenwandung eingedrehte koaxial umlaufende eine radial nach Innen weisende koaxial umlaufende Rastnase 29.1 bildende Nut 28.1 auf, in welche die an den Enden der Finger 30.1 angeordneten Rastnasen 31.1 des Ausgleichskolbens 2 zum Verrasten des Ausgleichskolbens mit dem Gehäuse eingreifbar sind. Es sei darauf hingewiesen, dass die Zwischenräume zwischen den einzelnen Fingern 30.1 nunmehr als Ausgleichsölkanäle 18.1 für das Ausgleichsöl 25 dienen.

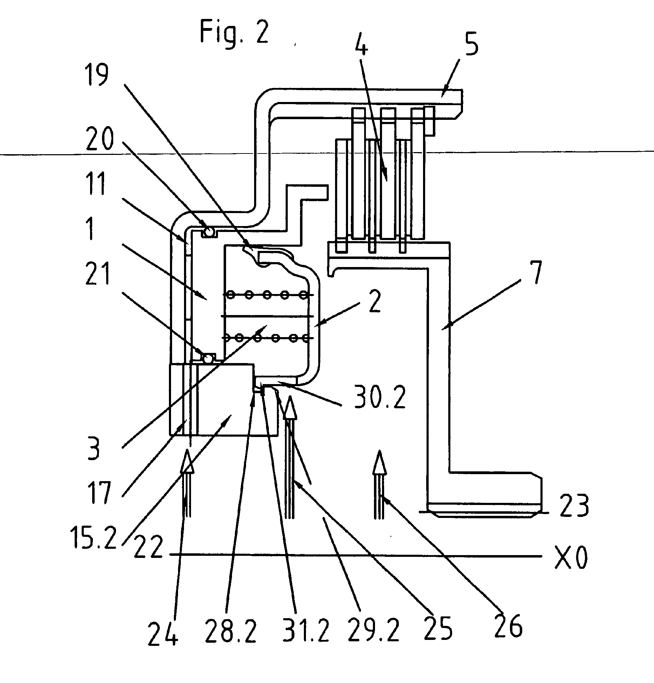

Die Figuren 2 zeigt ein zweites Ausführungsbeispiel einer Kupplungseinrichtung für ein Kraftfahrzeug mit erfindungsgemäß vorgesehener Rasteinrichtung. Hier ist die Rasteinrichtung dadurch realisiert, dass der im wesentlichen kreisringförmige Ausgleichskolben 2 mit einzelnen am Außenumfang angeordneten und im wesentlichen in Achsrichtung weisenden Fingern 30.2 versehen ist, welche an deren freien Enden jeweils eine radial nach innen weisende Rastnase 31.2 in der Art eines Widerhakens aufweisen. Korrespondierend hierzu weist das Mittelteil 15.2 eine in die zylindermantelförmige Außenwandung eingedrehte koaxial umlaufende, eine radial nach außen weisende koaxial umlaufende Rastnase 29.2 bildende Nut 28.2 auf. Auch hier dienen die Zwischenräume zwischen den einzelnen Fingern 30.2 als Ausgleichsölkanäle 18.2 für das Ausgleichsöl 25.

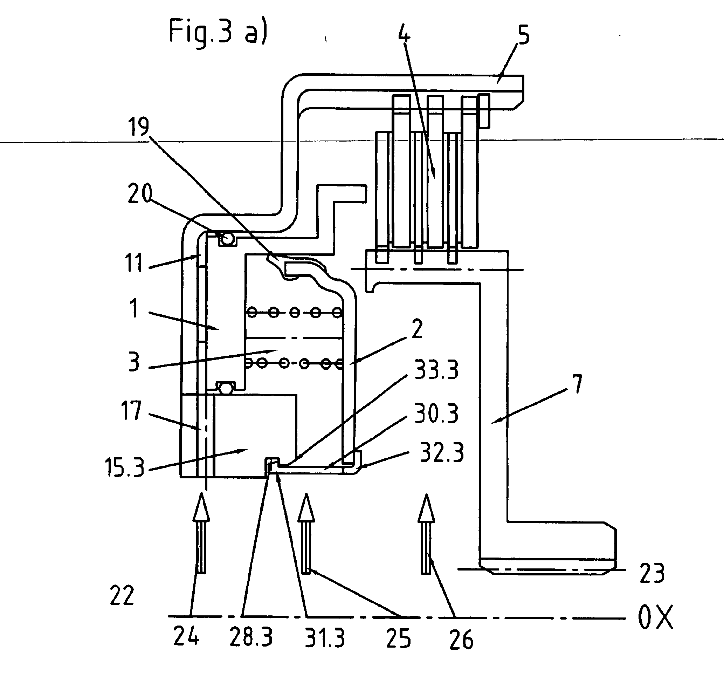

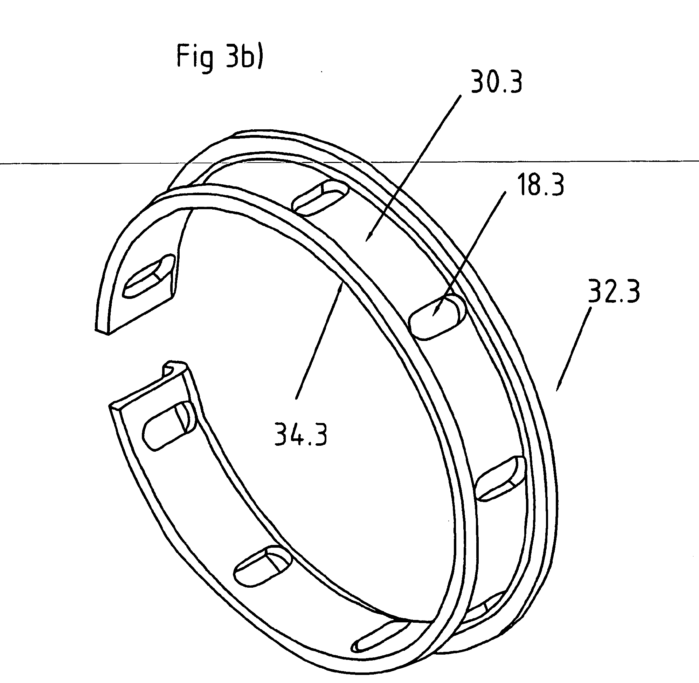

Die Figuren 3a) und 3b) zeigen ein drittes Ausführungsbeispiel einer Kupplungseinrichtung für ein Kraftfahrzeug mit erfindungsgemäß vorgesehener Rasteinrichtung. In dem hier in Rede stehenden Ausführungsbeispiel ist die Rasteinrichtung dadurch realisiert, dass für den im wesentlichen kreisringförmigen Ausgleichskolben 2 ein spezieller zylindrischer Haltering 32.3 vorgesehen ist. Dieser Haltering 32.3 umfängt einendseitig den Ausgleichskolben 2 an dessen Innenumfang. Andernendseitig weist dieser Haltering 32.3 ähnlich den vorgehend beschriebenen Ausgleichskolben 2 im wesentlichen in Achsrichtung ax verlaufende Finger 30.3 auf, welche hier entsprechend dem ersten Ausführungsbeispiel gemäß den Figuren 1a) und 1b) endseitig in eine Rastnase 31.3 münden. Im Unterschied zu den vorgenannten Beispielen ist die radial nach außen weisende Rastnase 31.3 umlaufend ausgebildet, so dass sich am Ende der Finger 30.3 ein geschlossener Kreisring bildet. Es versteht sich für den Fachmann von selbst, dass auch eine Rasteinrichtung eines derartigen Halterings 32.3 entsprechend den Rasteinrichtungen der vorgenannten Ausgleichskolben 2 ausgebildet sein kann und umgekehrt.

Der Vollständigkeit halber sei darauf hingewiesen, dass korrespondierend hierzu das Mittelteil 15.3 eine in die zylindermantelförmige Innenwandung eingedrehte koaxial umlaufende, eine radial nach Innen weisende koaxial umlaufende Rastnase 29.3 bildende Nut 28.3 aufweist, in welche die an den Enden der Finger 30.3 angeordnete Rastnase 31.3 des Halterings 32.3 zum Verrasten des Ausgleichskolbens 2 mit dem Gehäuse eingreifbar ist.

### Bezugszeichenliste

- 1: Druckkolben
- 2: Ausgleichskolben
- 3: Federpaket
- 4: Lamellenpaket
- 5: Außenlamellenträger
- 6: Außenlamelle
- 7: Innenlamellenträger
- 8: Innenlamelle
- 9: Endplatte
- 10: Druckplatte
- 11: Druckkammer
- 12: Ausgleichskammer
- 13: Kühlölraum
- 14: Druckelement
- 15.1: Mittelteil
- 15.2: Mittelteil
- 15.3: Mittelteil
- 15.4: Mittelteil
- 16.4: Sicherungsring
- 17: Druckölkanal
- 18.1: Ausgleichsölkanal
- 18.2: Ausgleichsölkanal
- 18.3: Ausgleichsölkanal
- 18.4: Ausgleichsölkanal
- 19: Dichtlippe
- 20: Dichtring
- 21: Dichtring
- 22: Antriebsseite
- 23: Abtriebsseite
- 24: Drucköl
- 25: Ausgleichsöl
- 26: Kühlöl
- 27: Sicherungsring
- 28.1: umlaufende Nut
- 28.2: umlaufende Nut
- 28.3: umlaufende Nut
- 29.1: umlaufende Rastnase
- 29.2: umlaufende Rastnase
- 29.3: umlaufende Rastnase
- 30.1: Finger
- 30.2: Finger
- 30.3: Finger
- 31.1: Rastnase
- 31.2: Rastnase
- 31.3: Rastnase
- 32.3: Haltering

- ax: Achse

## Patentansprüche

1. Kupplungseinrichtung, insbesondere Lamellenkupplungseinrichtung,
- mit einem Druckkolben (1) zum Erzeugen einer Druckkraft zum Betätigen einer Kupplung (4, 9, 8, 10, 27), wobei der Druckkolben (1) in einem Gehäuse (5, 15.1, 15.2, 15.3, 15.4) verschieblich geführt ist, wobei das Gehäuse (5, 15.1, 15.2, 15.3, 15.4) und der Druckkolben (1) eine Druckkammer (11) einschließen, welche zum Erzeugen der Druckkraft mit einem Druckmittel (24) beaufschlagbar ist, und
- mit einem Ausgleichskolben (2) zum Erzeugen einer Gegendruckkraft auf den Druckkolben (1), wobei der Ausgleichskolben (2) an dem Gehäuse (5, 15.1, 15.2, 15.3, 15.4) beim Betätigen der Kupplung (4, 9, 8, 10, 27) in Verschieberichtung des Druckkolbens (1) im wesentlichen unverschieblich gehalten ist, wobei das Gehäuse (5, 15.1, 15.2, 15.3, 15.4), der Druckkolben (1) und der Ausgleichskolben (2) eine Ausgleichskammer (12) einschließen, welche zum Erzeugen der Gegendruckkraft mit einem Gegendruckmittel beaufschlagbar ist
**dadurch gekennzeichnet, dass**
zum beim Betätigen der Kupplung (4, 9, 8, 10, 27) im wesentlichen unverschieblichen Halten des Ausgleichskolbens (2) an dem Gehäuse (5, 15.1, 15.2, 15.3, 15.4) in Verschieberichtung des Druckkolbens (1) eine Rasteinrichtung (28.1, 28.2, 28.3, 29.1, 29.2, 29.3, 30.1, 30.2, 30.3, 31.1, 31.2, 31.3) vorgesehen ist.

2. Kupplungseinrichtung nach Anspruch 1, **dadurch gekennzeichnet, dass** die Rasteinrichtung wenigstens ein Rastelement erster Art (28.1, 28.2, 28.3, 29.1, 29.2, 29.3) umfaßt, welches dem Gehäuse (5, 15.1, 15.2, 15.3) zugeordnet ist und wenigstens ein Rastelement zweiter Art (31.1, 31.2, 31.3), welches dem Ausgleichskolben (2) zugeordnet ist, wobei die Rastelemente erster und zweiter Art (28.1, 28.2, 28.3, 29.1, 29.2, 29.3, 31.1, 31.2, 31.3) miteinander in Rasteingriff verbringbar sind.

3. Kupplungseinrichtung nach Anspruch 2, **dadurch gekennzeichnet, dass** das Rastelement zweiter Art (31.1, 31.2) Bestandteil des Ausgleichskolbens (2) ist.

4. Kupplungseinrichtung nach Anspruch 2, **dadurch gekennzeichnet, dass** das Rastelement zweiter Art (31.3) Bestandteil einer Ausgleichskolbenhalteeinrichtung (32.3) ist.

5. Kupplungseinrichtung nach einem der vorangegangenen Ansprüche, bei der das Gehäuse (5, 15.1, 15.2, 15.3) im wesentlichen rotationssymmetrisch zu einer Achse (ax) ausgebildet ist und ein im wesentlichen zylindermantelförmiges Mittelteil ((15.1, 15.2, 15.3) umfaßt an dessen Außenwandung der Druckkolben (1), welcher im wesentlichen ringförmig ausgebildet ist, mit dessen Innenwandung axial verschieblich geführt ist und an dem der Ausgleichskolben (2), welcher im wesentlichen ringförmig ausgebildet ist, beim Betätigen der Kupplung (4, 9, 8, 10, 27) in axialer Verschieberichtung des Druckkolbens (1) unverschieblich gehalten ist, , **dadurch gekennzeichnet, dass** das Rastelement erster Art eine in der Innenwandung oder der Außenwandung des Mittelteils (15.1, 15.2, 15.3) im wesentlichen koaxial umlaufende Nut (28.1, 28.2, 28.3) ist und das Rastelement zweiter Art wenigstens eine Rastnase (29.1, 29.2, 29.3) umfaßt, welche zum Verrasten in die umlaufende Nut (28.1, 28.2, 28.3) eingreifbar ist.

6. Kupplungseinrichtung nach Anspruch 5, **dadurch gekennzeichnet, dass** die wenigstens eine Rastnase (31.1, 31.2) am Ende eines von dem Ausgleichskolben (1) oder von der Ausgleichskolbenhalteeinrichtung (32.3) im wesentlichen axial abstehenden Fingers (30.1, 30.2, 30.3) angeformt ist.

7. Kupplungseinrichtung nach einem der Ansprüche 5 oder 6, **dadurch gekennzeichnet, dass** die Rastnase (31.3) koaxial umlaufend ausgebildet ist.

8. Kupplungseinrichtung nach einem der Ansprüche 5, 6 oder 7, **dadurch gekennzeichnet, dass** die Ausgleichskolbenhalteeinrichtung (32.3) ringförmig ausgebildet ist.

## Claims

1. Clutch device, in particular multiplate clutch device,
- having a pressure piston (1) for generating a pressure force for actuating a clutch (4, 9, 8, 10, 27), with the pressure piston (1) being movably guided in a housing (5, 15.1, 15.2, 15.3, 15.4), with the housing (5, 15.1, 15.2, 15.3, 15.4) and the pressure piston (1) enclosing a pressure chamber (11) which can be acted on with a pressure medium (24) in order to generate the pressure force, and
- having a compensating piston (2) for generating a counteracting pressure force on the pressure piston (1), with the compensating piston (2) being held on the housing (5, 15.1, 15.2, 15.3, 15.4), so as to be substantially immovable in the movement direction of the pressure piston (1), during an actuation of the clutch (4, 9, 8, 10, 27), with the housing (5, 15.1, 15.2, 15.3, 15.4), the pressure piston (1) and the compensating piston (2) enclosing a compensating chamber (12) which can be acted on with a counteracting pressure medium in order to generate the counteracting pressure force,
**characterized in that**
a latching device (28.1, 28.2, 28.3, 29.1, 29.2, 29.3, 30.1, 30.2, 30.3, 31.1, 31.2, 31.3) is provided to hold the compensating piston (2) on the housing (5, 15.1, 15.2, 15.3, 15.4), so as to be substantially immovable in the movement direction of the pressure piston (1), during the actuation of the clutch (4, 9, 8, 10, 27).

2. Clutch device according to Claim 1, **characterized in that** the latching device comprises at least one latching element of a first type (28.1, 28.2, 28.3, 29.1, 29.2, 29.3), which is assigned to the housing (5, 15.1, 15.2, 15.3), and at least one latching element of a second type (31.1, 31.2, 31.3), which is assigned to the compensating piston (2), wherein the latching elements of the first and second types (28.1, 28.2, 28.3, 29.1, 29.2, 29.3, 31.1, 31.2, 31.3) can be placed in latching engagement with one another.

3. Clutch device according to Claim 2, **characterized in that** the latching element of the second type (31.1, 31.2) is a constituent part of the compensating piston (2).

4. Clutch device according to Claim 2, **characterized in that** the latching element of the second type (31.3) is a constituent part of a compensating piston retaining device (32.3).

5. Clutch device according to one of the preceding claims, in which the housing (5, 15.1, 15.2, 15.3) is designed so as to be substantially rotationally symmetrical with respect to an axis (ax), and comprises a substantially cylindrical-casing-shaped central part (15.1, 15.2, 15.3), on the outer wall of which the pressure piston (1), which is of substantially annular design, is guided in an axially movable manner by means of its inner wall, and on which central part (15.1, 15.2, 15.3) the compensating piston (2), which is of substantially annular design, is held, so as to be immovable in the axial movement direction of the pressure piston (1), during the actuation of the clutch (4, 9, 8, 10, 27), **characterized in that** the latching element of the first type is a substantially coaxially encircling groove (28.1, 28.2, 28.3) in the inner wall or in the outer wall of the central part (15.1, 15.2, 15.3), and the latching element of the second type comprises at least one latching lug (29.1, 29.2, 29.3) which, for latching, can engage into the encircling groove (28.1, 28.2, 28.3).

6. Clutch device according to Claim 5, **characterized in that** the at least one latching lug (31.1, 31.2) is integrally formed on the end of a finger (30.1, 30.2, 30.3) which projects substantially axially from the compensating piston (2) or from the compensating piston retaining device (32.3).

7. Clutch device according to one of Claims 5 or 6, **characterized in that** the latching lug (31.3) is of coaxially encircling design.

8. Clutch device according to one of Claims 5, 6 or 7, **characterized in that** the compensating piston retaining device (32.3) is of annular design.

## Revendications

1. Système d'embrayage, en particulier système d'embrayage à disques multiples,
- avec un piston de pression (1) pour produire une force de pression afin d'actionner un embrayage (4, 9, 8, 10, 27), dans lequel le piston de pression (1) est guidé en mouvement coulissant dans un boîtier (5, 15.1, 15.2, 15.3, 15.4), dans lequel le boîtier (5, 15.1, 15.2, 15.3, 15.4) et le piston de pression (1) délimitent une chambre de pression (11), qui peut être alimentée avec un fluide sous pression (24) pour produire la force de pression, et
- avec un piston d'équilibrage (2) pour produire une force de pression opposée sur le piston de pression (1), dans lequel le piston d'équilibrage (2) est maintenu essentiellement immobile sur le boîtier (5, 15.1, 15.2, 15.3, 15.4) dans la direction de déplacement du piston de pression (1) lors de l'actionnement de l'embrayage (4, 9, 8, 10, 27), dans lequel le boîtier (5, 15.1, 15.2, 15.3, 15.4), le piston de pression (1) et le piston d'équilibrage (2) délimitent une chambre d'équilibrage (12), qui peut être alimentée avec un fluide sous pression opposée pour produire la force de pression opposée,
**caractérisé en ce que**
- pour maintenir le piston d'équilibrage (2) essentiellement immobile sur le boîtier (5, 15.1, 15.2, 15.3, 15.4) dans la direction de déplacement du piston de pression (1) lors de l'actionnement de l'embrayage (4, 9, 8, 10, 27), il est prévu un dispositif d'encliquetage (28.1, 28.2, 28.3, 29.1, 29.2, 29.3, 30.1, 30.2, 30.3, 31.1, 31.2, 31.3).

2. Système d'embrayage selon la revendication 1, **caractérisé en ce que** le dispositif d'encliquetage comprend au moins un élément d'encliquetage d'un premier type (28.1, 28.2, 28.3, 29.1, 29.2, 29.3), qui est associé au boîtier (5, 15.1, 15.2, 15.3) et au moins un élément d'encliquetage d'un deuxième type (31.1, 31.2, 31.3), qui est associé au piston d'équilibrage (2), dans lequel les éléments d'encliquetage du premier et du deuxième types (28.1, 28.2, 28.3, 29.1, 29.2, 29.3, 31.1, 31.2, 31.3) peuvent être amenés en position d'encliquetage les uns avec les autres.

3. Système d'embrayage selon la revendication 2, **caractérisé en ce que** l'élément d'encliquetage du deuxième type (31.1, 31.2) est un composant du piston d'équilibrage (2).

4. Système d'embrayage selon la revendication 2, **caractérisé en ce que** l'élément d'encliquetage du deuxième type (31.3) est un composant d'un dispositif de retenue du piston d'équilibrage (32.3).

5. Système d'embrayage selon l'une quelconque des revendications précédentes, dans lequel le boîtier (5, 15.1, 15.2, 15.3) présente essentiellement la symétrie de révolution autour d'un axe (ax) et comprend une partie centrale essentiellement cylindrique périphérique (15.1, 15.2, 15.3) sur la paroi extérieure de laquelle le piston de pression (1), qui est de forme essentiellement annulaire, est guidé en mouvement axial avec sa paroi intérieure, et sur lequel le piston d'équilibrage (2), qui est de forme essentiellement annulaire, est maintenu immobile dans la direction de déplacement axial du piston de pression (1) lors de l'actionnement de l'embrayage (4, 9, 8, 10, 27), **caractérisé en ce que** l'élément d'encliquetage du premier type est une rainure périphérique essentiellement coaxiale (28.1, 28.2, 28.3) dans la paroi intérieure ou dans la paroi extérieure de la partie centrale (15.1, 15.2, 15.3) et l'élément d'encliquetage du deuxième type comprend au moins un ergot d'encliquetage (29.1, 29.2, 29.3), qui peut s'engager dans la rainure périphérique (28.1, 28.2, 28.3) pour réaliser l'encliquetage.

6. Système d'embrayage selon la revendication 5, **caractérisé en ce que** l'au moins un ergot d'encliquetage (31.1, 31.2) est formé à l'extrémité d'un doigt (30.1, 30.2, 30.3) saillant essentiellement en direction axiale sur le piston d'équilibrage (2) ou sur le dispositif de retenue du piston d'équilibrage (32.3).

7. Système d'embrayage selon l'une quelconque des revendications 5 ou 6, **caractérisé en ce que** l'ergot d'encliquetage (31.3) est réalisé coaxialement en périphérie.

8. Système d'encliquetage selon l'une quelconque des revendications 5, 6 ou 7, **caractérisé en ce que** le dispositif de retenue du piston d'équilibrage (32.3) est réalisé sous forme annulaire.
